# EUROPEAN PATENT SPECIFICATION

(11) **EP 1 037 467 B1**
(45) Date of publication and mention of the grant of the patent: **17.09.2003**
(21) Application number: 00301859.5
(22) Date of filing: 07.03.2000
(51) Int. Cl.: H04N 7/24

(54) **Real-time switching of video signals**
Umschaltung zwischen Video-Signalen in Echtzeit
Commutation de signaux vidéo en temps réel

(30) Priority: 08.03.1999 GB 9905215
(43) Date of publication of application: 20.09.2000
(73) Proprietor: Tandberg Television ASA, 1326 Lysaker (NO)
(72) Inventor: Bock, Alois Martin, Eastleigh, Hampshire SO53 4RH (GB); Richardson, Brian, Winchester, Hampshire SO23 0QA (GB)
(74) Representative: Molyneaux, Martyn William

(56) References cited:
- EP-A- 0 692 911
- EP-A- 0 755 157
- EP-A- 0 837 609
- WO-A-97/08898
- WO-A-97/45965
- WO-A-98/32281
- WO-A-98/32284
- WO-A-98/54910
- WO-A-99/52067
- US-A- 5 859 660

## Description

The present invention relates to the real-time switching of signals particularly, but not exclusively compressed video signals.

There are a number of known methods and apparatus for switching between video signals or inserting one video signal into another. All of the known methods require the ability to correct the switching or insertion process and as such will not work in real time. Particular examples of known techniques are illustrated in more detail below.

Uncompressed video signals can be switched in the vertical interval by synchronising the two video signals in such a way that the vertical blanking internals of the two video signals coincides. When switching compressed video signals one has to distinguish between lightly compressed bitstreams in which the temporal redundancy of video signals has not been (significantly) reduced and highly compressed bitstreams which do make substantial use of the temporal redundancy of video signals. The first case, often referred to in MPEG as 'short GOP' (GOP is a group of pictures), can be treated in a similar way to uncompressed video signals as far as switching is concerned, providing the switching is carried out at picture boundaries. In the second case, referred to as 'MPEG long GOP', switching is considerably more complicated due to temporal dependencies within the bitstream. Attention has so far mainly concentrated on finding suitable points for switching out of one bit stream and into the second one (referred to below as out-points and in-points respectively) and on solving the decoder buffer management problem. However, if the latency of the switching device is of importance, such as in "live to air" programming further problems arise.

In this case the insertion of a "GOP synchroniser" (the equivalent of a frame synchroniser in uncompressed or lightly compressed video signals) becomes unrealistic because of the long delays this would incur. In MPEG, a GOP is typically 0.5 seconds in duration. Therefore, a new method for switching between MPEG long GOP signals is needed.

WO99/52067A discloses a splicing system for plural digitally encoded data streams and uses a frame table to detect overflow and corrects overflow in a buffer by adding null packets. Similarly, EP0755157 and EP0692911 both insert null packets between spliced encoded streams.

The problem with null packets is that they cause a discontinuity in the data stream.

One object of the present invention is to overcome at least some of the problems of known systems.

According to a first aspect of this invention there is provided a method as claimed in claim 1 herein.

According to a second aspect of this invention there is provided an apparatus as claimed in claim 5 herein.

According to a feature of this invention there is provided an apparatus in combination with a system as defined by claim 9 herein.

The invention has an advantage that the splicing of two or more signals can occur in real-time.

Reference-will now be made, by way of example, to the accompanying drawings, in which:-
Figure 1 is a timing diagram of a compliant switch process according to the present invention;
Figure 2 is a block diagram of a splicer according to one aspect of the present invention; and
Figure 3 is a block diagram of a splicer in use in a typical broadcast system.

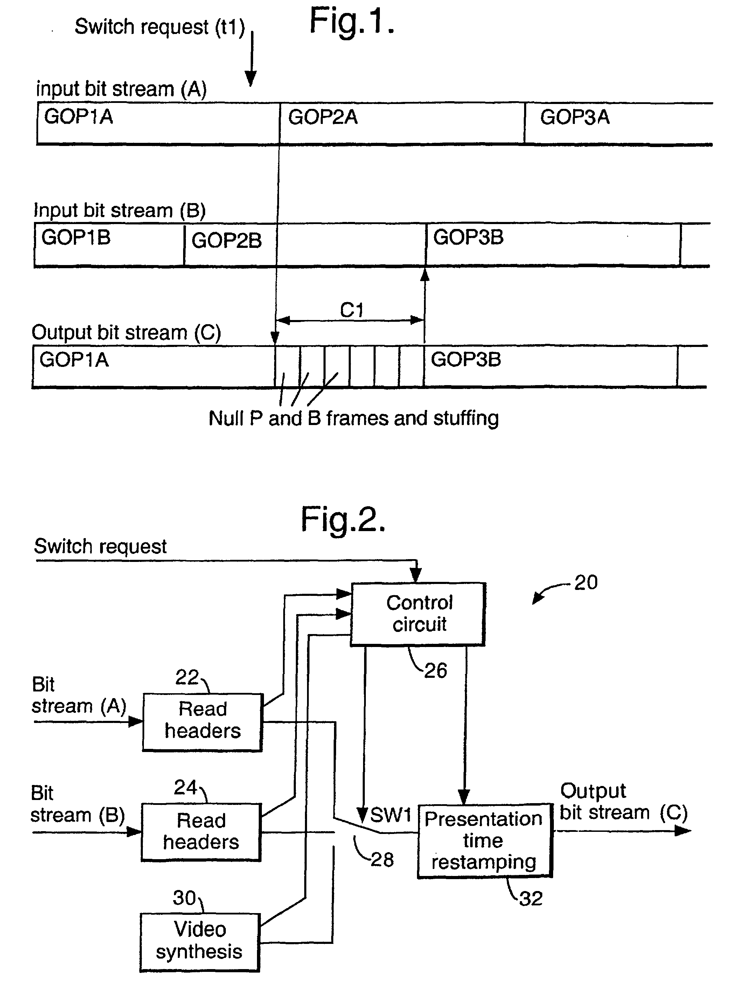

Figure 1 shows the solution to the basic problem of real-time splicing. Two bitstreams (A) and (B) arrive at the input of a switching device (not shown) hereafter referred to as a 'splicer'. The splicer switches between bitstream (A) and bitstream (B) as soon as possible after a switch request signal is detected (t1) so as to supply the output bitstream (C). Since neither (A) nor (B) should be delayed in the splicer, a new video segment (C1) has to be inserted. The duration of C1 depends on the relative temporal alignment of the two streams (A) and (B). The manner in which the insertion is achieved will be described in greater detail below with reference to Figure 2 and the detection of the in-point.

Figure 2 shows a block diagram of splicer with low latency. The header information (in-points, out-points, time stamps etc. which will be described in greater detail below) of the compressed video signals (A) and (B) is read from the bit streams by header readers 22 and 24 respectively and analysed in the control circuit. In the non-spliced state, bitstream (A) is output and bitstream (B) is constantly monitored for in-points. Once the control circuit receives a switch request signal, it waits for an out-point on the current stream (A) before it switches SW1 28 to synthesised video 30. The synthesised video is equivalent to the C1 video segment. From the presentation times of the out-point and predicted in-point the control circuit calculates the number of precompressed pictures which are to be inserted. Once the synthesised pictures are inserted and the in-point is detected on bitstream (B) the control circuit switches SW1 to select bitstream (B). In the spliced state the control circuit constantly calculates new presentation time stamps (32) to be inserted in the output bitstream. These can be calculated as described below or by any other appropriate method.

It should be noted that the presentation times of the two bitstreams do not, in general, coincide. Since presentation times have to be incremented in a linear fashion, however, the splicer has to overwrite presentation time stamps of bitstream (B). The insertion of full pictures and presentation time re-stamping reduces the alignment problem from one GOP to one picture. The residual misalignment can be ignored provided there is enough margin in the decoder buffer and the time shift does not lead to buffer underflow or overflow. Alternatively, the splicer can delay bitstream (B) by up to 1 picture period thus performing the equivalent of a frame synchroniser function in the compressed domain.

A further complication arises from the fact that the temporal position of compressed bitstreams depends not only on the presentation time of the pictures but also on the buffer occupancy of the decoder buffer, i.e. how long a particular picture spends in the decoder buffer before it is displayed. This delay is very significant in MPEG because pictures of the same presentation time can be shifted by as much as +0.5 seconds in the compressed domain. Therefore, the splicer has to insert the right number of pictures to provide a continuous sequence of pictures dependent of the relative temporal location of the two compressed streams. It will be understood by those skilled in the art that an MPEG picture can encode a video frame or a video field.
In order to make this possible the presentation time of the next in-point of the second bitstream (B) has to be known at the time when the bitstream (A) is to be terminated. There are two possible ways in which this goal can be achieved. In the first, the presentation time of the in-point is known. In the second, the splicer predicts the presentation time of the in-point from the presentation time of the previous in-point. Therefore the use of regular GOP structures in MPEG makes it possible to splice between compressed bitstreams without sending additional splice information. This is an essential feature of the present invention.
This feature can further be used to deal with other complications. In MPEG, pictures are not transmitted in display order. Since MPEG uses prediction both from past and future frames (a frame can be coded as one or two pictures), bi-directionally predicted pictures (B pictures) are transmitted after the two corresponding anchor frames (intra coded I frames or forward predicted P frames) from which the predictions were made. Furthermore, decoders are told in advance if a picture is not for immediate display. This is done by sending a temporal reference code with each picture. In order to satisfy the requirements of decoders, the splicer has to make sure that a legal sequence of frame types (I, P and B) is generated over the splice period. Table 1 shows the sequence of inserted pictures for a given number of required frames. Note that it is not possible to insert a single B frame because this would affect the temporal reference of the previous P frame that has already passed through a low latency splicer implementation. Insertion of a single I or P frame would lead to a transmission of two successive anchor frames which causes problems in most decoders. Instead, the splicer selects the next in-point and inserts an entire GOP with one additional B frame.

**Table 1 -**

| **legal insertion sequences** | |
|---|---|
| **Required no. of frames** | **Inserted sequence** |
| 1 | 1 GOP + 1 B frame |
| 2 | I, B B , |
| 3 | I,B,B |
| 4 | I, B, P, B |
| 5 | I,B,P,B,B |
| 6 | I,B,P,B,B,B |
| ... | ... |

In MPEG, video frames are normally coded as 'top field is first'. If 3.2 pull-down syntax is used in either one of the two bitstreams (A) or (B), the splicer needs to make sure that the field sequence is maintained, i.e. that a top field is always followed by a bottom field and a bottom field is always followed by a top field. For example if the last frame of bit stream (A) had 'top field is first' and the first frame of bitstream (B) has 'bottom field is first', the splicer needs to insert one frame with the 'repeat first field' set. In splicers with low latency, however, the parity (top or bottom field first) of the first frame is not known until the arrival of the in-point. Therefore, the aforementioned 'repeat first field' flag is set on the first B frame after the in-point. It should be noted that after frame re-ordering this first B frame is displayed before the in-point.

For the purpose of accomplishing a legal MPEG splice, the content of inserted pictures is arbitrary. In particular it is possible to insert 'pictures without content', which have the effect of freezing on the last moving picture of stream (A), as well as pictures with real video content. An example of an insertion with video content might be a coded black frame, a pre compressed station logo or even a short moving video sequence. A further possibility is the insertion of an apology caption in case one of the two input streams fails.

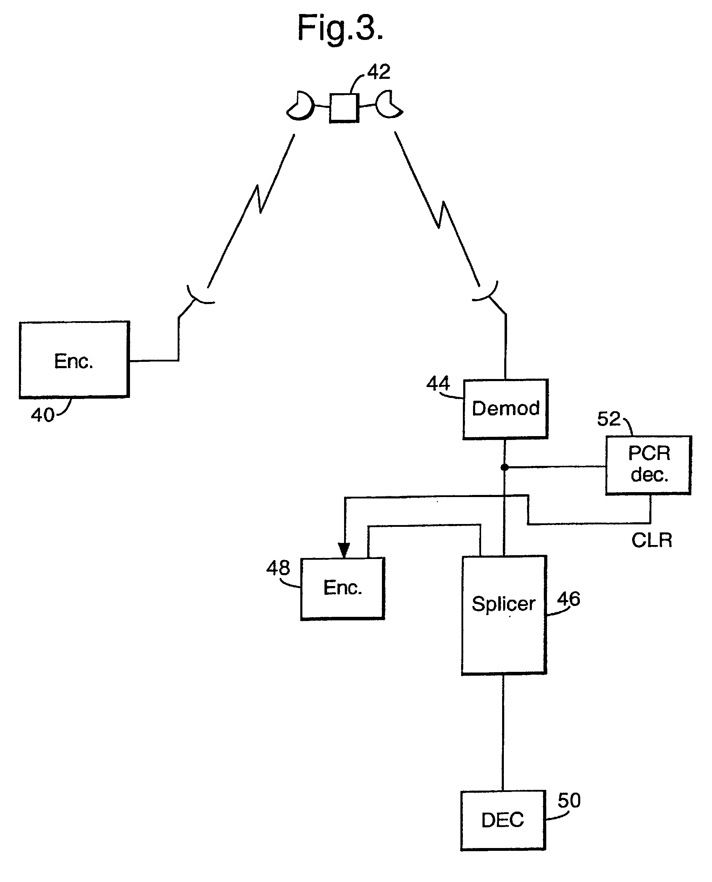

The present invention is particularly useful in splicing two or more bitstreams together in real-time. The example of figure 3 shows splicing of two bitstreams generated at two different locations

A first encoder 40 transmits a first bitstream via a satellite 42 (or other transmission medium). On receipt, at a remote location, the first bitstream is demodulated by demodulator 44 and passed via the splicer 46 to a decoder 50. A second remote location encoder 48 is connected to the splicer and operates a second bitstream. The splicer is controlled in the same manner as the splicer of figure 2 to select as an output either the first or second bitstream. It is preferred that a PCR or header decoder 52 decodes the header of the first bitstream.

As has been previously indicated it is essential that the two bitstreams are synchronised in order that they can be spliced. If there are any time anomalies the splicer cannot work. The crystal docks that may be used to synchronise the encoders are not sufficiently accurate for this purpose. This problem can be overcome by decoding the header information in the bitstream from the first encoder 40 and generating a 27 MHz clock signal. This is supplied to the second encoder and used to synchronise the output thereof with that of the first encoder 40. Thus when splicing occurs the two bitstreams are in sync.

It will be understood that the present invention by looking forward only (i.e. predicting) during the splicing operation can work in real-time. The splicing operation can be used to switch from a first bitstream to a second bitstream. There are many reasons why this might be necessary, these indude:-
insertion of a local program
insertion of a local advertisement
changing programming due to events of one sort or another, and
having the ability to close down the main links for repairs etc.

It is possible to insert one of many bitstreams into the splicer to be combined into the output thereof.

In most circumstances there are two quantities to be predicted about the in-point. The first is that the number of pictures to be inserted in C1 is calculated from the presentation time of the in-point. The second is that the size of the pictures to be inserted in C1 is calculated from the predicted arrival time of the in-point, i.e. how much data has to be inserted between the detected out-point of one signal and the in-point of the other signal. Both the above requirements should ideally be satisfied independently. Since the buffer occupancies at out-point and in-point can be different it is generally not possible to calculate one parameter from the other.

## Claims

1. A method of switching from a first to a second video signal comprising the steps of:
detecting (26) a switch request signal identifying and detecting (22, 24) an out-point in the first signal;
predicting (26) an in-point in the second signal which will occur after the out-point in the first signal, said predicting being measured from the previous in-point of the second signal;
stopping (20) the first signal at the detected out-point;
inserting (30) a number of pictures between the detected out-point of the first signal and the predicted in-point in the second signal; and
switching (28) to the second signal at the predicted in-point of the second signal, whereby the number of pictures inserted fills the temporal difference between the detected out-point of the first signal and the predicted in-point in the second signal.

2. The method of claim 1, further comprising determining the presentation time (32) of the predicted out-point in the first signal and the predicted in-point in the second signal.

3. The method of claim 1 or 2, wherein the out-point is at the end of a current group of pictures and the predicted in-point is at the start of a group of pictures in the second signal.

4. The method of claim 3, further comprising calculating (26) the number of pictures and/or the size of the pictures from said presentation times.

5. Apparatus for switching from a first to a second video signal in response to a switch request signal, the apparatus comprising:
means (26) for detecting a switch request signal;
means for identifying and detecting (22, 24) an out-point in the first signal;
means (20) for stopping the first signal at the end of the detected out-point;
insertion means (30) for inserting a number of pictures between the detected out-point of the first signal and a predicted in-point in the second signal, said prediction being measured from the previous in-point of the second signal; and
means (28) for switching to the second signal at the predicted in-point of the second signal, whereby the number of pictures inserted fills the temporal difference between the detected out-point of the first signal and the predicted in-point in the second signal.

6. The apparatus of claim 5, further comprising means (32) for measuring the presentation time of the detected out-point in the first signal and the predicted in-point in the second signal.

7. The apparatus of claims 5 or 6, wherein the out-point is at the end of a current group of pictures and the predicted in-point is at the start of a group of pictures in the second signal.

8. The apparatus of claim 6, wherein the number of pictures and/or the size of the pictures is calculated (26) from said presentation times.

9. The apparatus of any of claims 5 to 8 inclusive included in a system, said system including a first encoder (40) for encoding the first signal, means (42) for transmitting said first signal to said apparatus (46), decoding means (52) arranged to decode a header of said first signal and to apply said decoded header as a clock signal to a second encoder (48), said second encoder being arranged to apply said second signal to said apparatus (46), and an output of said apparatus being connected to a decoder (50).

## Patentansprüche

1. Verfahren zum Umschalten von einem ersten auf ein zweites Videosignal, wobei das Verfahren die folgenden Schritte umfasst:
Detektieren (26) eines Umschaltanforderungssignals, das einen Ausgangspunkt in dem ersten Signal identifiziert und detektiert (22, 24);
Vorhersehen (26) eines Eingangspunkts in dem zweiten Signal, der nach dem Ausgangspunkt in dem zweien Signal auftritt, wobei die genannte Vorhersage aus dem vorherigen Eingangspunkt des zweiten Signals gemessen wird;
Anhalten (20) des ersten Signals an dem detektierten Ausgangspunkt;
Einfügen (30) einer Mehrzahl von Bildern zwischen dem detektierten Ausgangspunkt des ersten Signals und dem vorhergesehen Eingangspunkt in das zweite Signal; und
Umschalten (28) zu dem zweiten Signal an dem vorhergesehenen Eingangspunkt des zweiten Signals, wodurch die Mehrzahl der eingefügten Bilder die zeitliche Differenz zwischen dem detektierten Ausgangspunkt des ersten Signals und dem vorhergesehen Eingangspunkt in dem zweiten Signal füllt.

2. Verfahren nach Anspruch 1, wobei das Verfahren ferner das Bestimmen der Präsentationszeit (32) des vorhergesehenen Ausgangspunkts in dem ersten Signal und des vorhergesehen Eingangspunkt in dem zweiten Signal umfasst.

3. Verfahren nach Anspruch 1 oder 2, wobei der Ausgangspunkt am Ende einer aktuellen Gruppe von Bildern gegeben ist, und wobei sich der vorhergesehene Eingangspunkt am Anfang einer Gruppe von Bildern in dem zweiten Signal befindet.

4. Verfahren nach Anspruch 3, wobei das Verfahren ferner das Berechnen (26) der Mehrzahl von Bildern und/oder der Größe der Bilder aus der genannten Präsentationszeit umfast.

5. Vorrichtung zum Umschalten von einem ersten auf ein zweites Videosignal als Reaktion auf ein Umschaltanforderungssignal, wobei die Vorrichtung folgendes umfasst:
eine Einrichtung (26) zum Detektieren eines Umschaltanforderungssignals;
eine Einrichtung zum Identifizieren und Detektieren (22, 24) eines Ausgangspunkts in dem Signal;
eine Einrichtung (20) zum Anhalten des ersten Signals an dem detektierten Ausgangspunkt;
eine Einrichtung (30) zum Einfügen einer Mehrzahl von Bildern zwischen dem detektierten Ausgangspunkt des ersten Signals und einem vorhergesehen Eingangspunkt in das zweite Signal; wobei die genannte Vorhersage aus dem vorherigen Eingangspunkt des zweiten Signals gemessen wird; und
eine Einrichtung (28) zum Umschalten zu dem zweiten Signal an dem vorhergesehenen Eingangspunkt des zweiten Signals, wodurch die Mehrzahl der eingefügten Bilder die zeitliche Differenz zwischen dem detektierten Ausgangspunkt des ersten Signals und dem vorhergesehen Eingangspunkt in dem zweiten Signal füllt.

6. Vorrichtung nach Anspruch 5, wobei die Vorrichtung ferner eine Einrichtung (32) zum Messen der Präsentationszeit des detektierten Ausgangspunkts in dem ersten Signal und des vorhergesehen Eingangspunkt in dem zweiten Signal umfasst.

7. Vorrichtung nach Anspruch 5 oder 6, wobei der Ausgangspunkt am Ende einer aktuellen Gruppe von Bildern vorgesehen ist, und wobei sich der vorhergesehene Eingangspunkt an dem Anfang einer Gruppe von Bildern in dem zweiten Signal befindet.

8. Vorrichtung nach Anspruch 6, wobei die Mehrzahl von Bildern und/oder die Größe der Bilder aus den genannten Präsentationszeiten berechnet wird (26).

9. Vorrichtung nach einem der Ansprüche 5 bis 8, eingeschlossen in ein System, wobei das genannte System folgendes aufweist: einen ersten Codierer (40) zum Codieren des ersten Signals, eine Einrichtung (42) zum Übermitteln des genannten ersten Signals an die genannte Vorrichtung (46), eine Decodierungseinrichtung (52), die so angeordnet ist, dass sie einen Header des genannten ersten Signals decodiert und den genannten decodierten Header als ein Taktsignal einem zweiten Codierer (48) zuführt, wobei der genannte zweite Codierer so angeordnet ist, dass das genannte zweite Signal der genannten Vorrichtung (46) zugeführt wird, und wobei ein Ausgang der genannten Vorrichtung mit einem Decodierer (50) verbunden ist.

## Revendications

1. Procédé pour commuter depuis un premier vers un second signal vidéo comprenant les étapes consistant à :
détecter (26) un signal de demande de commutation identifiant et détectant (22, 24) un point de sortie dans le premier signal ;
prédire (26) un point d'entrée dans le second signal qui surviendra après le point de sortie dans le premier signal, ladite prédiction étant mesurée à partir du précédent point d'entrée du second signal ;
arrêter (20) le premier signal au point de sortie détecté ;
insérer (30) un nombre d'images entre le point de sortie détecté du premier signal et le point d'entrée prédit dans le second signal ; et
commuter (28) vers le second signal au point d'entrée prédit du second signal, moyennant quoi le nombre d'images insérées remplit la différence temporelle entre le point de sortie détecté du premier signal et le point d'entrée prédit dans le second signal.

2. Procédé selon la revendication 1, comprenant en outre la détermination du temps de présentation (32) du point de sortie prédit dans le premier signal et du point d'entrée prédit dans le second signal.

3. Procédé selon la revendication 1 ou 2, dans lequel le point de sortie se trouve à la fin d'un groupe actuel d'images et le point d'entrée prédit se trouve au début d'un groupe d'images dans le second signal.

4. Procédé selon la revendication 3, comprenant en outre le calcul (26) du nombre d'images et/ou de la taille des images à partir desdits temps de présentation.

5. Appareil pour commuter depuis un premier vers un second signal vidéo en réponse à un signal de demande de commutation, l'appareil comprenant :
des moyens (26) pour détecter un signal de demande de commutation ;
des moyens pour identifier et détecter (22, 24) un point de sortie dans le premier signal ;
des moyens (20) pour arrêter le premier signal à la fin du point de sortie détecté ;
des moyens d'insertion (30) pour insérer un nombre d'images entre le point de sortie détecté du premier signal et un point d'entrée prédit dans le second signal, ladite prédiction étant mesurée depuis le précédent point d'entrée du second signal ; et
des moyens (28) pour commuter vers le second signal au point d'entrée prédit du second signal, moyennant quoi le nombre d'images insérées remplit la différence temporelle entre le point de sortie détecté du premier signal et le point d'entrée prédit dans le second signal.

6. Appareil selon la revendication 5, comprenant en outre des moyens (32) pour mesurer le temps de présentation du point de sortie détecté dans le premier signal et du point d'entrée prédit dans le second signal.

7. Appareil selon la revendication 5 ou 6, dans lequel le point de sortie se trouve à la fin d'un groupe actuel d'images et le point d'entrée prédit se trouve au début d'un groupe d'images dans le second signal.

8. Appareil selon la revendication 6, dans lequel le nombre d'images et/ou la taille des images est calculé (26) à partir desdits temps de présentation.

9. Appareil selon l'une quelconque des revendications 5 à 8 incluses intégré à un système, ledit système comprenant un premier codeur (40) pour coder le premier signal, des moyens (42) pour transmettre ledit premier signal audit appareil (46), des moyens de décodage (52) arrangés pour décoder un en-tête dudit premier signal et pour appliquer ledit en-tête décodé comme signal d'horloge à un second décodeur (48), ledit second décodeur étant arrangé pour appliquer ledit second signal audit appareil (46), et une sortie dudit appareil étant reliée à un décodeur (50).
